(19) Europäisches Patentamt

European Patent Office

Office européen des brevets

(11) **EP 0 980 021 B1**

(12) **EUROPÄISCHE PATENTSCHRIFT**

(45) Veröffentlichungstag und Bekanntmachung des Hinweises auf die Patenterteilung:
**08.02.2006 Patentblatt 2006/06**

(51) Int Cl.:
*G03B 27/73* (2006.01)    *H04N 1/40* (2006.01)

(21) Anmeldenummer: **99115461.8**

(22) Anmeldetag: **05.08.1999**

(54) **Vorrichtung und Verfahren zum Belichten von Bildinformationen auf lichtempfindliches Aufzeichnungsmaterial**

Device and method for exposing image information on light sensitive material

Appareil et méthode pour l'exposition d'information d'image sur du matériau sensible à la lumière

(84) Benannte Vertragsstaaten:
**CH DE FR GB IT LI**

(30) Priorität: **11.08.1998 DE 19836337**

(43) Veröffentlichungstag der Anmeldung:
**16.02.2000 Patentblatt 2000/07**

(73) Patentinhaber: **AgfaPhoto GmbH**
**51373 Leverkusen (DE)**

(72) Erfinder: **Müller, Peter**
**82110 Germering (DE)**

(56) Entgegenhaltungen:
**DE-A- 19 749 925       US-A- 5 036 351**
**US-A- 5 170 403**

**Beschreibung**

Die Erfindung betrifft eine digitale Bildgeneriereinrichtung zum Belichten von lichtempfindlichem Material nach dem Oberbegriff von Anspruch 1 sowie ein Verfahren zur Steuerung einer digitalen Bildgeneriereinrichtung nach dem Oberbegriff von Anspruch 10.

Die EP-OS 0 691 568 beschreibt einen fotografischen Belichter, in dem als Lichtquelle LED-Elemente vorgesehen sind. Hier wird erläutert, daß Helligkeitsunterschiede einzelner LEDs, die zu lokalen Ungleichmäßigkeiten der Lichtquelle führen, zu korrigieren sind, indem das Licht, das ein entwickeltes, unbelichtetes Testnegativ beim Kopieren durchdringt, in den drei Farben Rot, Blau und Grün punktweise ausgemessen wird. Die so bestimmten photometrischen Daten werden verwendet, um die einzelnen LEDs so anzusteuern, daß die zu kopierenden Negative anschließend gleichmäßig beleuchtet werden.

Es hat sich jedoch gezeigt, daß ein solches Eintestverfahren ungenügend ist, da die LEDs bei jedem Einschaltvorgang Helligkeitsschwankungen unterliegen, die von der Einschaltdauer abhängig sind und zu massiven Qualitätsverlusten in der Kopie führen können. In der EP-OS 0 691 568 wird vorgeschlagen, dieses Problem dadurch zu entschärfen, daß Kennlinien der LEDs aufgenommen und abgespeichert werden, die für verschiedene LED-Helligkeiten den Zusammenhang zwischen Einschaltdauer und Helligkeitsschwankungen wiedergeben. Diese Kennlinien müssen dann bei der LED-Ansteuerung zusätzlich berücksichtigt werden. Für jede auftretende LED-Anfangshelligkeit und Einschaltdauer muß eine solche Kennlinie aufgenommen und abgespeichert werden.

In der noch nicht veröffentlichten Anmeldung DE 197 33 370 wird ein digitales Belichtungssystem beschrieben, bei dem mittels einer Beleuchtungseinheit und eines pixelweise ansteuerbaren Lichtmodulators ein Farbbild erzeugt wird, welches dann als Indexprint auf Fotopapier aufbelichtet wird. Zur Beleuchtung des Lichtmodulators werden hier LEDs verwendet, da diese eine lange Lebensdauer haben und sehr schnell schaltbar sind. Eine Verschlußeinrichtung, wie sie bei anderen Lichtquellen notwendig ist, kann dadurch eingespart werden.

In der noch nicht veröffentlichten Anmeldung DE 197 46 224 werden ebenfalls verschiedenfarbige LEDs als Beleuchtungseinrichtung für einen Lichtmodulator, hier ein DMD (Digital Micromirror Device) eingesetzt. Das DMD wird hier zur Erzeugung einer unscharfen Maske, also eines modifizierten Abbildes der Vorlage, verwendet. Mit der Maske wird die Vorlage beim Kopieren von fotografischen Filmen überlagert, um den Großflächenkontrast in der Kopie zu reduzieren.

Die heute verlangte, hohe Qualität von kopierten Farbbildem macht es notwendig, die bei all diesen Belichtungsgeräten auftretenden, von der Einschaltdauer abhängigen Helligkeitsschwankungen der Lichtquelle zu messen und zu kompensieren. Die in der EP-OS 0 631 568 vorgeschlagene Korrektur mit Hilfe von Kennlinien ist hierfür zu aufwendig. Weiterhin wurde festgestellt, daß trotz Kompensation gemäß EP-OS 0 631 568 deutlich sichtbare Dichteschwankungen auftreten.

Es war daher Aufgabe der Erfindung, eine Vorrichtung und ein Verfahren zum Belichten eines Bildes auf lichtempfindliches Material so auszugestalten, daß die Helligkeit des Kopierlichts präzise so geregelt werden kann, daß eine gleichmäßige Belichtung erfolgt. Die Regelung soll auf einfache Weise bewirken, daß alle auftretenden Schwankungen des Kopierlichts ausgeglichen werden, so daß sich diese nicht als Dichteschwankungen in dem kopierten Bild niederschlagen.

Gelöst wird die Aufgabe durch eine Vorrichtung mit den Merkmalen von Anspruch 1 und ein Verfahren mit den Merkmalen von Anspruch 11.

Es konnte nachgewiesen werden, daß sich bei Lichtemittem wie LEDs oder Laserdioden während ihrer Einschaltdauer nicht nur die Helligkeit ändert, sondern sich auch die Emissionsbanden spektral verschieben. Das bedeutet, daß sich während der Einschaltdauer einer LED der Bereich ändert, in dem ihr Emissionsspektrum mit dem Spektralbereich überlappt, in dem das entsprechende Empfindlichkeitsmaximum des Fotopapiers liegt. Auch wenn der Betriebsstrom während der Einschaltdauer nachgeregelt wird, so daß die Helligkeit konstant bleibt, macht sich dieser Spektralshift durch Dichteschwankungen bei der Wiedergabe eines Bildes bemerkbar.

Bei roten LEDs kann dieser Spektralshift während der Einschaltdauer 6 nm hin zu größeren Wellenlängen betragen. Bei der Belichtung von Agfa-CN-Fotopapier mit einer GaAlAs-LED verschiebt sich das Emissionsspektrum beispielsweise in Richtung des roten Empfindlichkeitsmaximums. Gleichzeitig fällt die Intensität der LED ab.

Soll nun eine gleichmäßige Dichteverteilung auf dem Fotopapier erreicht werden, muß die LED unter Berücksichtigung beider Effekte geregelt werden.

Erst wenn sowohl die Helligkeit als auch die Wellenlängenverschiebung des emittierten Lichts ermittelt und der Lichtemitter unter Berücksichtigung der spektralen Lage der Empfindlichkeitsmaxima des lichtempfindlichen Materials geregelt wird, kann eine korrekte Belichtung des lichtempfindlichen Materials erfolgen. Nachfolgend wird diese Regelung als die Regelung der "effektiven Helligkeit" bezeichnet.

Erfindungsgemäß ist die Vorrichtung mit einer Meßeinrichtung verbunden, die mit mindestens zwei Detektoren für eine Belichtungsfarbe (z. B. rot, grün oder blau) die Helligkeit des emittierten Lichts in unterschiedlichen spektralen Anteilen dieser Farbe erfaßt.

Die Verschiebung der roten LEDs (die anderen Farben können ebenso behandelt werden) läßt sich beispielsweise folgendermaßen bestimmen:

Ein erster, ungefilterter Detektor mißt die Detektorspannung $U_1$, die in erster Näherung direkt proportional zur gesamten, im Roten emittierten LED-Intensität ist. Ein zweiter Detektor ist mit einem Masseglasfilter versehen, welcher nur für den langwelligsten Anteil des roten Emissionsspektrums durchlässig ist. Die Detektorspannung $U_2$ ist also proportional zu der am langwelligen Rand des roten Spektrums emittierten Intensität. Verschiebt sich nun während des Einschaltvorgangs der LEDs das Spektrum der roten LEDs zu längeren Wellenlängen, so wächst das Detektorsignal $U_2$ an, während $U_1$ als Maß für die Maximumintensität unverändert bleibt. Das Verhältnis $U_1/U_2$ gibt also Auskunft über die spektrale Lage der Emission.

Die zu regelnde effektive Helligkeit als Funktion der Intensität $U_1$ und der spektralen Verschiebung der Emission $\delta\lambda$ ergibt sich damit näherungsweise zu

$$I_{eff}(\delta\lambda) = U_1 \cdot \Phi\left(\frac{U_2}{U_1}\right)$$

Entwickelt man die für die spektrale Empfindlichkeit des Fotopapiers charakteristische Funktion $\Phi$ nach Potenzen von $U_2/U_1$, so erhält man

$$I_{eff}(\delta\lambda) = U_1 \left( A + B\left(\frac{U_2}{U_1}\right) + C \cdot \left(\frac{U_2}{U_1}\right)^2 + \ldots \right)$$

mit den papierspezifischen Konstanten A, B, C.
Im einfachsten Fall genügt es,

$$I_{eff}(\delta\lambda) \approx U_1 \cdot A + U_2 \cdot B = konstant$$

zu halten, also mit zwei Sensoren $U_1$ und $U_2$ zu messen, um einen befriedigend gleichmäßigen Dichteanstieg bei der Belichtung des Fotopapiers zu erreichen.

Die Konstanten A und B müssen für jeden möglichen Papiertyp vorbestimmt und in einer Look-up-Table (LUT) abgespeichert werden.

Um eine noch genauere Regelung der Belichtungsmenge zu erreichen, können mehr als zwei Sensoren pro Farbe verwendet werden. Mittels der zusätzlichen Meßgrößen können dann detailliertere Veränderungen der Emissionsbanden, wie beispielsweise deren Verbreiterung, nachgewiesen und entsprechend berücksichtigt werden.

Da diese erfindungsgemäße Regelung immer die aktuellen Bedingungen berücksichtigt, werden automatisch auftretende Alterungseffekte der Belichtungseinrichtung sowie Umwelteinflüsse, die sich auf deren Abstrahlverhalten auswirken, kompensiert. Auch Auswechslungen der Leuchteinheiten können vorgenommen werden, ohne daß ein Nacheichen der Belichtungssteuerung erforderlich wäre.

Insbesondere kurz nach dem Einschalten der Lichtquelle zeigt sich die spektrale Veränderung deutlich. So ist es wesentlich, diese zeitlichen Veränderungen gerade bei Printern zu korrigieren, bei denen mechanische Verschlüsse eingespart werden, indem schnell schaltbare Lichtemitter ständig ein- und ausgeschaltet werden. Auch bei digitalen Minilabs, Indexprintsystemen, Printern im medizinischen Bereich etc. werden schnelle Arbeitsvorgänge und damit kurze Schaltzeiten der Bilderzeugungseinrichtung zunehmend wichtiger, so daß auch hier Korrekturen immer notwendiger werden.

Im allgemeinen ist bei allen Lichtquellen, die sich stark erwärmen, davon auszugehen, daß aufgrund der Erwärmung eine spektrale Verschiebung des emittierten Lichtes stattfindet. Kann diese Erwärmung im Gerät nicht durch Kühlung oder schnelle Wärmeableitung unterbunden werden, ist eine Korrektur der Lichtstärke, basierend auf der Messung der spektralen Verschiebung des emittierten Lichts, dringend erforderlich.

Dies kann bei Printern zum Problem werden, wenn zum Kopieren von Negativen auf Fotopapier verschiedenfarbige LEDs eingesetzt werden. Diese LEDs haben zum einen den Vorteil, daß sie sehr schnell schaltbar sind, zum anderen sind sie in jeder Farbe direkt ansteuerbar, so daß das von ihnen erzeugte farbige Kopierlicht direkt an die spektrale Empfindlichkeit des Fotopapiers angepaßt werden kann, ohne daß zusätzliche Farbfilter in den Strahlengang eingeschwenkt werden müssen.

Schnell schaltbare LEDs oder Laserdioden können aber ebenso wie die in der EP 0 713 330 A1 beschriebenen Vakuum-Fluoreszenz-Druckköpfe (VFDk) auch eingesetzt werden, um digitale Bilddaten direkt auf das Fotopapier aufzubelichten, wobei die erfindungsgemäße Steuerung vorteilhaft eingesetzt werden kann.

Als lichtempfindliches Material zur Abbildung digitaler Bilder eignen sich beispielsweise Fotopapier, Leuchtbildschirme oder thermografisches Material sowie alle anderen Materialien, die lichtempfindliche Farbstoffe aufweisen.

Lichtemitter, Laserdioden sowie alle anderen üblichen Lichtquellen können aber auch als Beleuchtungseinheiten in einer Bildgeneriereinrichtung verwendet werden, wobei das von den Emittern oder Dioden erzeugte Licht dann mittels eines Lichtmodulators moduliert wird. Je nach Ansteuerung des Lichtmodulators wird dann ein Bild generiert oder das Kopierlicht für ein zu kopierendes Negativ modifiziert (z. B. bei unscharfer Maskierung, Farbmaskierung oder zum Ausgleich von Farbkippen). Bei derartigen Bildgeneriereinrichtungen kann die erfindungsgemäße Belichtungssteuerung entweder durch direktes Beeinflussen der Beleuchtungseinheit oder aber - falls die Farben nacheinander aufbelichtet werden - durch Berücksichtigung der spektralen Verschiebung und damit Veränderung der effektiven Helligkeit der jeweiligen, aufzubelichtenden Bilder bei der Lichtmodulation mit dem Lichtmodulator erfolgen.

Als Lichtmodulatoren werden beispielsweise LCD, TFT-LCD, PLZT, FLCD oder Ähnliches verwendet. Diese Lichtmodulatoren haben alle den Nachteil, daß sie mit polarisiertem Licht arbeiten, was zu starken Lichtverlusten führt. Auch sind sie teilweise für den Betrieb in heutigen schnellen Printern zu langsam schaltbar.

Vorteilhafter ist aufgrund seiner sehr geringen Schaltzeit und direkten Lichtübertragung das DMD, das das Licht durch an- und abschalten pixelweise schaltbarer Spiegelelemente zeitlich moduliert. Durch die Ansteuerelektronik des DMD sind feste Schaltintervalle vorgegeben, die aufaddiert werden können, um verschiedene Dichtestufen auf dem zu belichtenden Material zu erzeugen. Um einen gleichmäßigen Bildeindruck zu gewährleisten, ist es aber notwendig, daß bei allen gleich langen Schaltintervallen die gleiche Lichtmenge auf das Material übertragen wird. Deshalb ist es gerade bei diesen Lichtmodulatoren wesentlich, die effektive Helligkeit der Beleuchtungseinrichtung konstant zu halten. Hier ist also die erfindungsgemäße Regelung der Lichtquelle, basierend auf der Messung von Helligkeitsschwankungen und spektraler Verschiebung, dringend erforderlich, wenn Dichteschwankungen in der Abbildung vermieden werden sollen.

Die Meßeinrichtung, die die Meßgrößen für die Regelung der Helligkeit der Bildgeneriereinrichtung ermittelt, besteht aus mehreren Einheiten. Diese Einheiten weisen Sensoren unterschiedlicher spektraler Empfindlichkeit auf. Als Sensoren lassen sich Fotodioden, Transistoren, CCD, pyroelektrische Detektoren oder ähnliche bekannte Detektoren verwenden.

Um unterschiedliche spektrale Anteile einer Farbe messen zu können, müssen pro Farbe mindestens zwei Sensoren vorgesehen sein. Diese Sensoren können dann entweder unterschiedliche spektrale Empfindlichkeiten zeigen, durch vorgeschaltete Farbfilter unterschiedliche spektrale Anteile der Lichtmenge messen oder räumlich getrennt sein, so daß räumlich spektral aufgespaltenes Licht an verschiedenen Orten gemessen wird. Die spektrale Aufspaltung des Lichts kann durch Prismen, teildurchlässige Spiegel, Gitter oder ähnliche optische Elemente erfolgen. Es ist auch möglich, mit einem Sensor das gesamte Licht aller zu steuernden Farben zu messen und mit der jeweils zweiten Meßeinheit pro Farbe den langwelligen oder kurzwelligen oder auch einen anderen spektralen Anteil der Lichtmenge jeweils einer Farbe zu bestimmen.

Weitere Einzelheiten und Vorteile der Erfindung ergeben sich aus den Unteransprüchen im Zusammenhang mit der Beschreibung eines Ausführungsbeispiels, das anhand der Zeichnungen eingehend erläutert wird.

Es zeigen:

Fig. 1    ein Bildaufzeichnungsgerät mit einer erfindungsgemäß geregelten, digitalen Bildgeneriereinrichtung,

Fig. 2    eine Meßeinrichtung mit mehreren Detektoren, die in der Umgebung eines pixelweise ansteuerbaren Lichtmodulators angeordnet sind und

Fig. 3    das Emissionsspektrum von typischen roten LEDs, verglichen mit der Empfindlichkeitskurve eines typischen Fotopapiers.

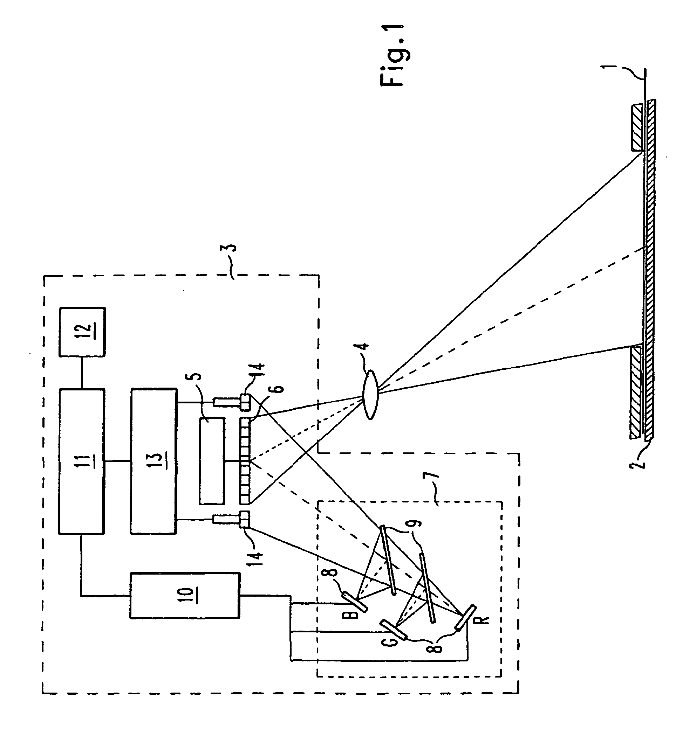

Fig. 1 zeigt eine Bildaufzeichnungseinrichtung, mittels der ein digitales Bild auf Fotopapier 1, welches sich auf einer Papierbühne 2 befindet, aufbelichtet wird. Das digitale Bild wird von der digitalen Bildgeneriereinrichtung 3 erzeugt und über ein Objektiv 4 auf das Fotopapier 1 abgebildet. Eine Steuereinrichtung 5 steuert in Abhängigkeit von der digitalen Bildinformation ein DMD 6 pixelweise an, so daß das Licht der Beleuchtungseinrichtung 7 moduliert zu dem Objektiv 4 reflektiert wird.

Für die Beleuchtungseinrichtung werden einzeln schaltbare LED-Arrays 8 in drei Farben genutzt, deren Licht über dichroitische Spiegel 9 zusammengeführt wird.

Die Lichtmenge, die von der Beleuchtungseinrichtung abgegeben wird, wird von einer Steuereinrichtung 10 gesteuert. Die aktuellen Ansteuerströme für die LED-Arrays 8 werden an einer Recheneinheit 11 ermittelt. Zur Berechnung dieser Ströme werden für das Fotopapier 1 spezifische Werte aus einer Look-up-Table (LUT) 12 verwendet, welche mit Meßgrößen einer Lichtmeßeinrichtung 13 verrechnet werden. Die Meßeinrichtung 13 weist mehrere Fotodioden 14 auf, die in der Umgebung des DMD 6 angeordnet sind.

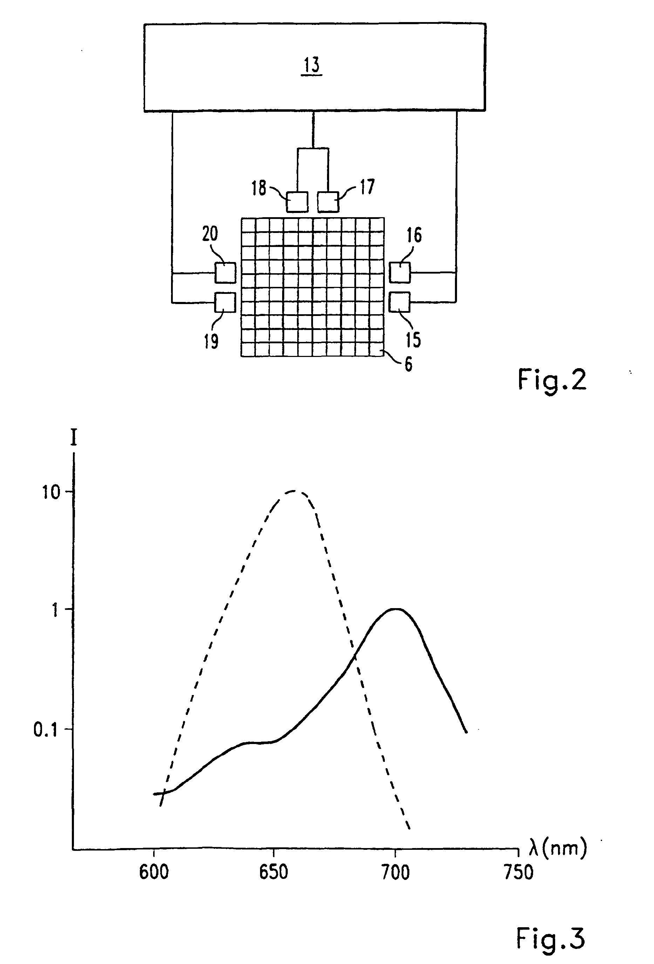

Eine vorteilhafte Anordnung der Detektoren ist in Fig. 2 dargestellt. Für jede der drei aufzubelichtenden Farben sind an je einer Seite des DMD 6 zwei Fotodioden vorgesehen. Vorteilhafterweise werden immer zwei Fotodioden nebeneinander angeordnet, von denen eine die Gesamtlichtmenge und die andere die Lichtmenge eines spektralen Anteils einer Farbe ermittelt. So mißt beispielsweise die Fotodiode 15 die Gesamtlichtmenge aller Farben, der Fotodiode 16 ist aber ein Filter vorgeschaltet, so daß sie nur einen bestimmten Anteil (z. B. den langweiligen Anteil) der im Roten emittierten Lichtmenge messen kann.

Die Fotodioden 17 und 19 messen ebenso wie die Diode 15 die Gesamtlichtmenge und die Fotodioden 18 und 20 entsprechend mit Hilfe eines Filters nur einen grünen bzw. blauen Anteil der Gesamtlichtmenge.

Diese Anordnung hat den Vorteil, daß die Gesamtlichtmenge immer an derselben Stelle gemessen wird wie die spektralen Anteile. Verzichtet man auf diesen Vorteil, so wäre auch vorstellbar, nur eine Diode zur Messung der Gesamtlichtmenge zu benutzen, wodurch zwei Sensoren eingespart werden könnten.

Fig. 3 zeigt das Emissionsspektrum einer GaAlAs-LED (gestrichelt), verglichen mit der Empfindlichkeitskurve von Agfa-CN-Fotopapier (durchgezogen), aufgetragen gegen die Wellenlänge. Um die Größen vergleichbar zu machen, wurde die emittierte Intensität auf 10 normiert. Da die Empfindlichkeitskurve des Fotopapiers im langwelligen Bereich des emittierten Spektrums liegt, wird die Belichtung effektiver, sobald sich das Spektrum aufgrund der LED-Erwärmung nach rechts verschiebt.

**Patentansprüche**

1.   Vorrichtung (3) zum digitalen Belichten vcn Bildinformationen auf lichtempfindliches Aufzeichnungsmaterial (1) mit einer schnell schaltbaren Lichtquelle (8), die Belichtungslicht in wenigstens einer Farbe emittiert, mit einer Steuereinheit zum Steuern der Belichtungslichtmenge und mit einer Messeinrichtung (12) zum Messen vom Belichtungslicht, wobei die Steuereinheit mit der Messeinrichtung einen Regelkreis bildet, wobei die Messeinrichtung mindestens zwei Detektoren (14) aufweist, die zwei unterschiedliche Spektralanteile der gleichen Belichtungsfarbe messen.

2.   Vorrichtung nach Anspruch 1, **dadurch gekennzeichnet, daß** der Regelkreis geschlossen ist.

3.   Vorrichtung nach Anspruch 1, **dadurch gekennzeichnet, daß** die Lichtquelle LEDs aufweist.

4.   Vorrichtung nach Anspruch 1, **dadurch gekennzeichnet, daß** die Lichtquelle einen Vakuum-Fluoreszenz-Druckkopf (VFDK) aufweist.

5.   Vorrichtung nach Anspruch 1, **dadurch gekennzeichnet, daß** die Lichtquelle einen Lichtmodulator (6) aufweist.

6.   Vorrichtung nach Anspruch 5, **dadurch gekennzeichnet, daß** der Lichtmodulator ein DMD ist.

7.   Vorrichtung nach Anspruch 1, **dadurch gekennzeichnet, daß** die Detektoren unterschiedliche spektrale Empfindlichkeit besitzen.

8.   Vorrichtung nach Anspruch 1, **dadurch gekennzeichnet, daß** ein Detektor der Meßeinrichtung Farbfilter aufweist.

9.   Vorrichtung nach Anspruch 1, **dadurch gekennzeichnet, daß** die Detektoren der Meßeinrichtung Photodioden aufweisen.

10.   Vorrichtung nach Anspruch 1, **dadurch gekennzeichnet, daß** die Steuereinheit mit einer look-up-table (LUT) verbunden ist, die für das lichtempfindliche Aufzeichnungsmaterial spezifische Werte enthält.

11.   Verfahren zum digitalen Belichten von Bildinformationen auf lichtempfindliches Aufzeichnungsmaterial, wobei eine schnell schaltbare Lichtquelle Belichtungslicht in wenigstens einer Belichtungsfarbe emittiert, das emittierte Belichtungslicht gemessen, die Lichtquelle entsprechend der Messung angesteuert wird und während der Belichtung mindestens zwei unterschiedliche Spektralanteile der gleichen Belichtungsfarbe gemessen und die Messwerte zur Berechnung von Ansteuergrößen verwendet werden.

**12.** Verfahren nach Anspruch 11, **dadurch gekennzeichnet, daß** die unterschiedlichen Spektralanteile mit mehreren Detektoren gemessen werden.

**13.** Verfahren nach Anspruch 11, **dadurch gekennzeichnet, daß** Licht von LEDs erzeugt wird.

**Claims**

**1.** Equipment (3) for digital exposure of picture information onto light sensitive printing material (1) with a fast switching light source (8), which generates exposure light in at least one colour, with a control unit to control the exposure light quantity and with a measuring device (12) to measure the exposure light, whereby the control unit forms a control circuit with the measuring device and whereby the measuring device features at least two detectors (14) which measure two different spectral parts of the same exposure colour.

**2.** Equipment according to claim 1, **characterized by** the fact that the control circuit is closed

**3.** Equipment according to claim 1, **characterized by** the fact that the light source consists of LEDs.

**4.** Equipment according to claim 1, **characterized by** the fact that the light source features a vacuum fluorescent print head (VFKD).

**5.** Equipment according to claim 1, **characterized by** the fact that the light source features a light modulator (6).

**6.** Equipment according to claim 5, **characterized by** the fact that the light modulator is a DMD.

**7.** Equipment according to claim 1, **characterized by** the fact that the detectors feature a variable spectral sensitivity.

**8.** Equipment according to claim 1, **characterized by** the fact that a detector in the measuring device features a colour filter.

**9.** Equipment according to claim 1, **characterized by** the fact that the detectors in the measuring device feature photo diodes.

**10.** Equipment according to claim 1, **characterized by** the fact that the control unit is connected to a Look-up-table (LUT) which contains the specific values for the light sensitive printing material.

**11.** Method for digital exposure of picture information onto light sensitive printing material, whereby a fast switching light source generates exposure light in at least one colour, the generated light is measured, the light source is controlled according to the measurement and during the exposure at least two different spectral parts of the same exposure colour are measured and these values are used to calculate the control factor.

**12.** Method according to claim 11, **characterized by** the fact that the various parts of the spectrum are measured by diverse detectors.

**13.** Method according to claim 11, **characterized by** the fact that light is generated by the LEDs.

**Revendications**

**1.** Dispositif (3) d'exposition numérique d'informations imagées sur un matériel d'enregistrement photosensible (1) avec une source lumineuse (8) à commutation rapide qui émet la lumière d'exposition dans au minimum une couleur, avec une unité de commande pour la commande de la quantité de lumière d'exposition (1), et avec un dispositif de mesure (12) pour la mesure de la lumière d'exposition, à l'occasion de quoi l'unité de commande constitue un circuit de réglage avec le dispositif de mesure, à l'occasion de quoi le dispositif de mesure comporte au minimum deux détecteurs (14) qui mesurent deux proportions du spectre différentes possédant la même couleur d'exposition.

**2.** Dispositif selon la revendication 1, **caractérisé par le fait que** le circuit de réglage est fermé.

**3.** Dispositif selon la revendication 1, **caractérisé par le fait que** la source lumineuse comporte des DEL

**4.** Dispositif selon la revendication 1, **caractérisé par le fait que** la source lumineuse comporte une tête d'imprimante fluorescente sous vide (VFDK).

**5.** Dispositif selon la revendication 1, **caractérisé par le fait que** la source lumineuse comporte un modulateur de lumière (6).

**6.** Dispositif selon la revendication 1, **caractérisé par le fait que** le modulateur de lumière est un DMD.

**7.** Dispositif selon la revendication 1, **caractérisé par le fait que** les détecteurs possèdent une sensibilité spectrale différente.

**8.** Dispositif selon la revendication 1, **caractérisé par le fait qu'**un détecteur du dispositif de mesure comporte des filtres de couleur.

**9.** Dispositif selon la revendication 1, **caractérisé par le fait que** les détecteurs du dispositif de mesure comportent des photodiodes.

**10.** Dispositif selon la revendication 1, **caractérisé par le fait que** l'unité de commande est reliée à une look-up-table (LUT) qui comporte des valeurs spécifiques pour le matériel d'enregistrement photosensible.

**11.** Procédé d'exposition numérique d'informations imagées sur un matériel d'enregistrement photosensible, à l'occasion de quoi une source lumineuse à commutation rapide émet une lumière d'exposition dans au minimum une couleur d'exposition et à l'occasion de quoi la lumière d'exposition émise est mesurée, la source lumineuse est excitée en fonction de la mesure et, pendant l'exposition, au minimum deux proportions du spectre différentes possédant la même couleur d'exposition sont mesurées et les valeurs de mesure sont utilisées pour le calcul de paramètres d'excitation.

**12.** Procédé selon la revendication 11, **caractérisé par le fait que** les différentes proportions de spectre sont mesurées avec plusieurs détecteurs.

**13.** Procédé selon la revendication 11. **caractérisé par le fait que** la lumière est produite par des DEL.

Fig.1

Fig.2

Fig.3